Europäisches Patentamt

European Patent Office

Office européen des brevets

(11) Publication number: **0 281 054 B1**

## EUROPEAN PATENT SPECIFICATION

(45) Date of publication of patent specification: **19.05.93**  (51) Int. Cl.⁵: **G09G 1/00**

(21) Application number: **88102989.6**

(22) Date of filing: **29.02.88**

(54) **Method and apparatus for displaying a pointer.**

(30) Priority: **02.03.87 US 21043**

(43) Date of publication of application:
**07.09.88 Bulletin 88/36**

(45) Publication of the grant of the patent:
**19.05.93 Bulletin 93/20**

(84) Designated Contracting States:
**DE FR GB IT**

(56) References cited:
**EP−A− 0 183 246**
**US−A− 4 259 725**

(73) Proprietor: **International Business Machines
Corporation
Old Orchard Road
Armonk, N.Y. 10504(US)**

(72) Inventor: **Lisle, Ronald Jay
8815 Black Oak Street
Austin Texas 78729(US)**

(74) Representative: **Killgren, Neil Arthur
IBM United Kingdom Limited Intellectual
Property Department Hursley Park
Winchester Hampshire SO21 2JN (GB)**

Rank Xerox (UK) Business Services
(3.10/3.6/3.3.1)

EP 0 281 054 B1

**Description**

This invention relates to data processing systems in general and more particularly to a data processing system which includes a directional pointer which is configured to give the appearance of being a three dimensional object on a two dimensional display.

In computer systems employing a visual display device and a keyboard there is usually a moveable marker on the screen of the visual display device known as a cursor, which denotes the location which the next action taken by the keyboard will affect. For example, in word processing applications the cursor position on the visual display device usually denotes the location at which the next symbol generated by the keyboard will be entered into the document. However, while the cursor is currently associated with a symbol which has previously been keyed, the keyboard selection of a "delete" function will remove the character then associated with the cursor.

In virtually all prior art keyboard/display applications, whether used in a nonintelligent terminal environment or in a standalone, high performance computer application, the keyboard has included a plurality of keys which are used to move the position on the visual display, without otherwise affecting the displayed information. These keys, known as cursor motion keys, were sometimes dedicated only to this function, while in other systems they were used as cursor motion keys only while another key was depressed or toggled to shift the function of these keys from another function such as numeric keys or character keys to the cursor motion function.

Cursor motion keys have typically moved the cursor position in increments on the visual display device. These key have typically moved the cursor one character position to the left or right for each short depression of the horizontal motion keys and one line position up or down for each short depression of the vertical cursor motion keys. In many systems a longer depression of a cursor motion key results in repetitive, but incremental movement of the cursor position on the visual display device.

Many computer programs used in conjunction with keyboards and visual display devices provide additional flexibility with the use of cursor motion keys. More specifically, these programs have provided greater direct incremental movements of the cursor position than the previous movements of single character positions or a rapid succession of single character movements. For example, word processing programs have provided the capability to advance the cursor from any position along a horizontal line of text to either the beginning of that line or the end of that line by depression of an additional control key before the cursor motion key is depressed. Similarly, some word processing programs have provided for cursor movements by word, by paragraph, or by page in a similar manner. In each of these cases, the cursor movement was from an undefined location to a logically finite point. It has not been known to use cursor motion keys to move the cursor from such an unknown location to another random location in a direct movement. For such a movement to the second, random location, it has been necessary when using cursor motion keys to increment the cursor in one coordinate direction until that coordinate of the random point has been reached and then increment the cursor in the other coordinate direction until the second coordinate of the random location of the cursor has been reached.

In addition to the cursor motion keys there exists a class of pointing devices which let one move a pointer on the visual display device in a rapid, direct manner, rather than by incremental movements. One example of this class of devices has come to be commonly referred to as a "mouse". These devices have come to be used to allow an operator to rapidly point to an operation, command, function, or option named on the display which is desired to be selected by the clicking of a button associated with the pointing device. This pointing device has also been used with the button associated therewith to rapidly move a pointer from the beginning to the end of a block of data to be marked for further processing, such as moving the data, copying the data, or deleting the data. Additionally, the pointer has been used in the prior art to rapidly change the position of a cursor by a direct movement, rather than the incremental movement of the cursor motion keys.

For the purposes of simplifying the remaining description of this invention, the mouse will be used as the example of the above described class of pointing devices, although those skilled in the art will recognize that this invention is also applicable to the display of pointers controlled by other pointing devices such as, but not limited to, joysticks, tablets, and light pens.

When a mouse and the visual pointer associated therewith are included in a data processing system, it has been a problem when a single pointer depiction, or icon, is used on the display screen to point to an item to be selected. Suppose, for example, that the orientation of this pointer is such that it points to the upper left corner of the display frame. This means, of course, that the entire pointer icon is visible when pointing to something at the top of the display frame or at the left edge of the display frame. However, with the leftward and upward orientation of the icon, it will be understood that pointing to objects at the lower or rightmost boundaries of the display screen would be impossible. The upward and leftward pointing icon is, nevertheless, perhaps the most logical orientation, since, in general, it is more often that information is placed at the top and left side of a display frame than at the bottom or right side.

One solution to the problem of not being able to display a leftward and upward pointing icon at the bottom and right side of the displayed frame has been to prohibit display of any other information at a point on the display frame which either lower or beyond the rightmost limit at which a leftward and upward pointing icon can be displayed. This has the obvious disadvantage of removing a predetermined portion of the display frame from use, even though it may be rarely desirable to display the pointing icon in those areas.

Another solution to this problem has been to use an icon of a different, symmetrical shape, such that some portion of the icon is always in the displayable portion of the frame. For example, an icon comprising at least two crossed lines which might, for example, look like cross hairs in a gun sight, have been used as these icons instead of an arrowhead. By using the crossed lines it could always be guaranteed that at least two of the lines would be displayed even if were moved to the lower right corner of the d9splay frame.

However, such icons comprising crossed lines have not been particularly recognisable, especially in a graphics display environment which may include a great multiplicity of other lines that could be confused with this icon. Thus, a pointer resembling some kind of arrowhead has become somewhat the standard for this type of icon.

An arrangement of the above type is described in European Patent Application EP − A − 0 183246.

It has also been proposed for example in Unites States Patent US − A − 4,259,725, to use more than one pointer icon that changed orientation in one axis. Thus, although the pointer might always be pointing toward the left, an icon pointing upward could be used for all points in the top half of the screen and a different icon pointing downward could be used for all points in the bottom half of the screen. Utilising this approach, it may have followed to employ icons of different orientation in the axes of the screen, such that the icons might be pointing to the upper left, to the upper right, to the lower left, and to the lower right. Utilising such an approach, the full icon could always be visible on a display frame utilising a choice of multiple icons that can point in any direction nevertheless suffers a significant problem when the icon is pointing near the centre of the display frame. When such an icon crosses either the vertical axis or the horizontal axis, there is a very distracting toggling effect that takes place, since the most minute movement of the icon on the display frame causes the pointer to somewhat reverse its orientation. This is especially apparent when the centre of the screen is crossed. The provision of a much greater number of points minimises the problem in one axis while maximising the problem in the other axis. For example consider many rightward pointing arrowheads at many different angles relative to the horizontal axis. If these are used to identify all addressable points in the right half of a display screen and a similar plurality of leftward pointing arrowheads are used to identify all addressable points on the left half of the screen, consider the toggling that occurs when the pointer is moved through the vertical axis of the screen during a horizontal movement of the pointer near the horizontal axis of the screen. At one moment all of the body of the arrowhead is on one side of the screen and immediately thereafter, all of the body of the arrowhead is on the other side of the screen.

In view of the above, in systems that use pointer icons such as arrowheads, it would be highly desirable to employ the use of multiple pointer icons without realizing the above − described abrupt, toggling effect which has been observed when the pointer is moved from one half of the screen to the other.

Accordingly, a perspective view of a pointer icon is utilized such that toward the middle of the display frame the icon appears to point toward the display surface, rather than toward an edge of the display frame. This creates an illusion that the icon, such as an arrowhead, is reversing its direction smoothly in three dimensional space. Although the display screen is only a two dimension surface, the multiple icons can readily be configured to be shown in perspective and, therefore, appear to be three dimensional, without the requirement for gray scale or half tone display technology. The invention is readily implemented with conventional monochromatic or color graphics hardware commonly available for personal computers.

The foregoing and other objects, features, extensions, and advantages of the invention will be apparent from the following more particular description of preferred embodiments of the invention as illustrated in the accompanying drawings.

Fig. 1 is a block diagram of a data processing system which includes a stored program for performing the function of this invention in conjunction with the data processing system.

Fig. 2 is a graphical depiction of the problem encountered when using a single icon pointer.

Fig. 3 is a graphical depiction of the use of a plurality of two dimensional pointers.

Fig. 4 is a graphical depiction of the three dimensional pointer technique employed by this invention.

Fig. 5 is a flow chart of the operation of displaying the three dimensional pointer icon of this invention.

EP 0 281 054 B1

Fig. 6 is a graphical depiction of a collection of icon images which are used in implementing this invention.

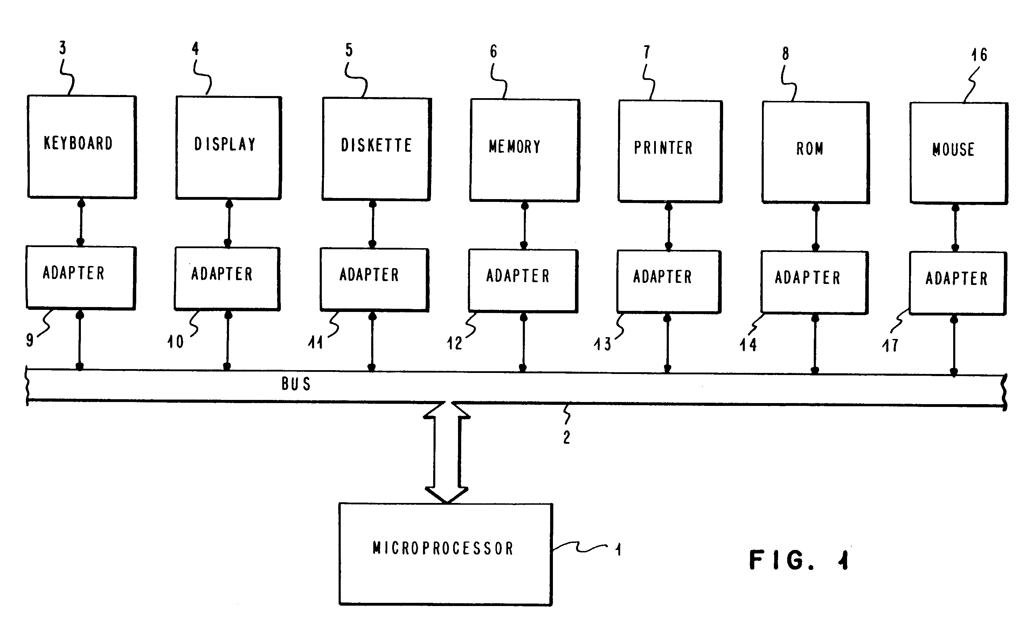

Beginning with reference to the block diagram of Fig 1, a typical personal computer architecture is shown, such as the configuration used in the IBM Personal Computer. The focal point of this architecture comprises a microprocessor 1 which may, for example, be an Intel 8088 or similar microprocessor. The microprocessor 1 is connected to a bus 2 which comprises a set of data lines, a set of address lines and a set of control lines. A plurality of I/O devices or memory or storage devices 3 – 8 and 16 are connected to the bus 2 through separate adapters 9 – 14 and 17, respectively. For example, the display 4 may be the IBM Personal Computer Color Display and the adapter 10 may, accordingly, be the IBM Color/Graphics Adapter. The other devices 3 and 5 – 8 and adapters 9 and 11 – 14 are either included as part of an IBM Personal Computer or are available as plug – in options from the IBM Corporation. The Mouse 16 and adapter 17 are, for example, available from the Microsoft Corporation as the Microsoft Mouse, bus version. The random access memory (RAM) 6 and the read – only memory (ROM) 8 and their corresponding adapters 12 and 14 are included as standard equipment in the IBM Personal Computer, although additional random access memory to supplement memory 6 may be added via a plug – in memory expansion option.

Within the read – only memory 8 are stored a plurality of instructions, known as the basic input/output operating system, or BIOS, for execution by the microprocessor 1. The BIOS controls the fundamental operations of the computer. An operating system such as the IBM Personal Computer Series Disk Operating System by Microsoft Corporation, or DOS, most commonly used with the IBM Personal Computer family, is loaded into the memory 6 and runs in conjunction with the BIOS stored in the ROM 8. It will be understood by those skilled in the art that the personal computer system could be configured so that parts or all of the BIOS are stored in the memory 6 rather than in the ROM 8 so as to allow modifications to the basic system operations by changes made to the BIOS program, which would then be readily loadable into the random access memory 6.

An application program such as the IBM DisplayWrite 4 word processing program may also be loaded into the memory 6 to provide instructions to the microprocessor 1 to enable a comprehensive set of word processing tasks, including the creation and revision of text documents, to be performed by the personal computer system shown in FIG. 1. An application program loaded into the memory 6 is said to run in conjunction with the disk operating system previously loaded into the memory 6.

When using a computer such as the IBM Personal Computer for the system shown in Fig. 1, the mouse hardware 20 may, for example, comprise the Microsoft Mouse. This mouse is available in either a serial version, which plugs into an Asynchronous Communications Adapter available for the IBM Personal Computer, or in a bus version which includes an adapter card which plugs into an accessory slot in the IBM Personal Computer. The display device 22 may comprise the display 4 and adapter 10 described above relative to the IBM Personal Computer.

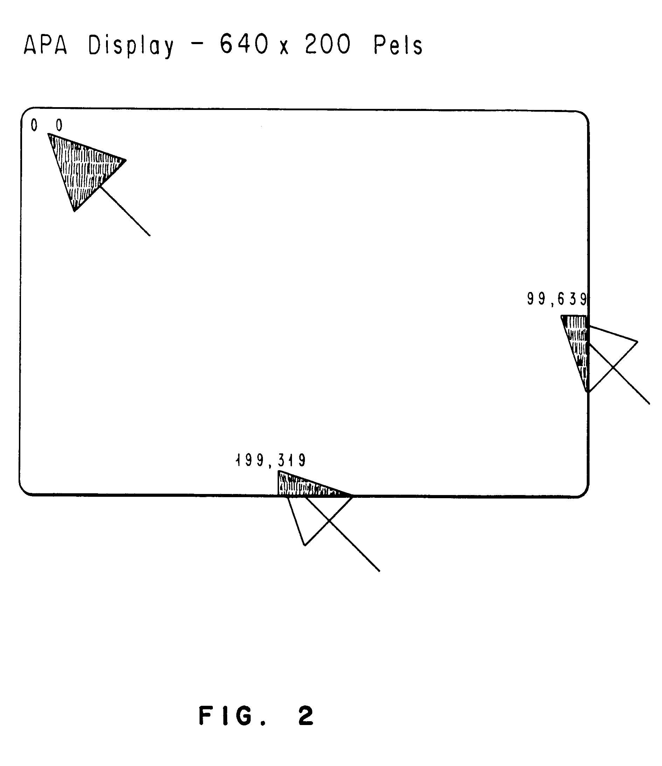

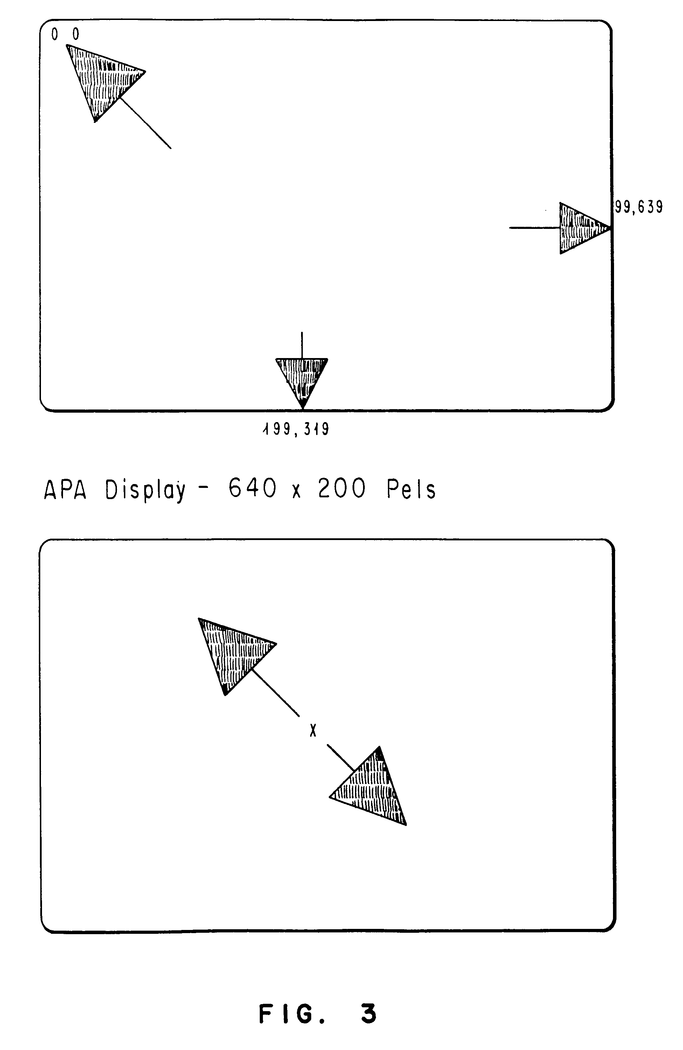

Refer now to Figs. 2 and 3 for graphical depictions of the pointer icon problems described in the "Background" section above. Both of these figures depict all points addressable displays of 640 pels by 200 pels which is available when using the IBM Color Graphics Adapter and the IBM Color Display. In both of these figures, the numbers associated with the icon pointers are the vertical and horizontal pel coordinate positions, respectively. In Fig. 2 a single icon pointer is shown which may be fully visible in most portions of the display frame but would not be fully visible, for example, in the lower and right most portions of the display frame.

In Fig. 3 the technique of using multiple pointer icons is shown. However, consider pointer movement through the center portion of the screen in which case the icon necessarily toggles either 90 degrees or 180, degrees depending on whether one axis or both axes are crossed. Even if many more icons were provided, as long as these icons were shown to be two dimensional objects, a toggling effect would be apparent as the icon moved across the center portion of the screen.

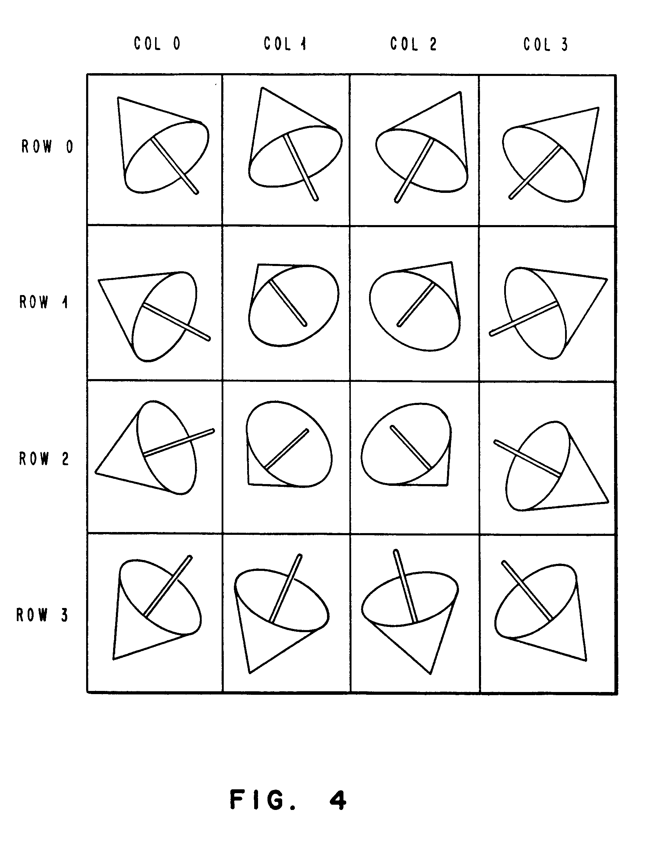

Refer now to Fig. 4 for a depiction of the results of an embodiment of this invention. It will be noted that Fig. 4 is shown in a grid arrangement of 16 areas. Although at the edges of Fig. 4 the direction of the icon pointer is similar to that shown in the upper portion of Fig. 3, a dramatic difference is found in the area near the center of Fig. 4. In this center area, because of the apparent three dimensional depiction of the pointer icon, the icon appears to be pointing primarily toward the flat surface of the center of the screen, rather than toward an edge of the screen. Thus, the icon pointer appears to be pointing toward the edges of the screen when the pointer is in the grid blocks which have an edge of the screen as their boundary. The more the pointer is moved toward the center of the screen, the less it appears to be primarily pointing toward an edge of the screen and the more it appears to be primarily pointing toward the flat surface of the screen. Ideally, the very center of the screen the icon pointer would appear as a three dimensional object pointing directly toward the center of the screen and perpendicular to the surface of the screen. This is in marked

4

contrast to the toggling of the icon pointer that occurs near the center of the screen in the prior art depiction shown in the lower portion of Fig. 3.

Accordingly, with the present invention, a plurality of icon images are utilized in which at least some of the icons depicted appear to be perspectieve or three dimensional representations which are tilted to point toward the flat surface of a display screen rather than lying parallel to the surface of the display screen. As the icon pointer, controlled by a pointing device such as a mouse, is moved from an edge of the screen toward the center of the screen, the icon depicting the pointer position is selected from the icons in the bit maps which depict pointers pointing toward the surface of the screen.

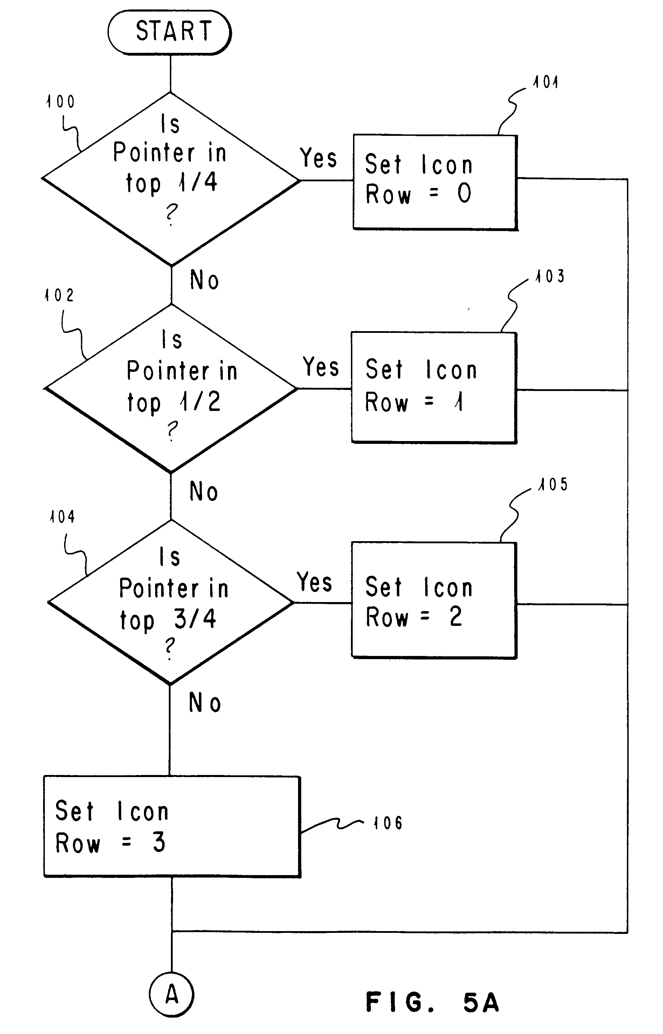

Refer now to the flow chart in Figs. 5A – 5C for a description of the programming utilized to select the appropriate icon pointer in relation to screen position. In Fig. 5A the vertical position of the pointer is determined. At block 100 a test is made to determine if the pointer is in the top one – fourth of the screen. If so, at block 101, the icon to be displayed will come from row zero in the icon image table. If not, at block 102 a test is made to determine if the pointer is in the top half of the screen. If so, at 103 the icon to be displayed is selected from row 1 in the icon image table. If the pointer is not in the top half of the screen, at block 104 a test is made to determine if the pointer is in the top three – fourths of the screen. If so, at 105 the icon will be selected from row 2 of the icon image table. If the pointer is not in the top three – fourths of the screen, the icon to be displayed will come from row 3 of the icon image table as noted in block 106.

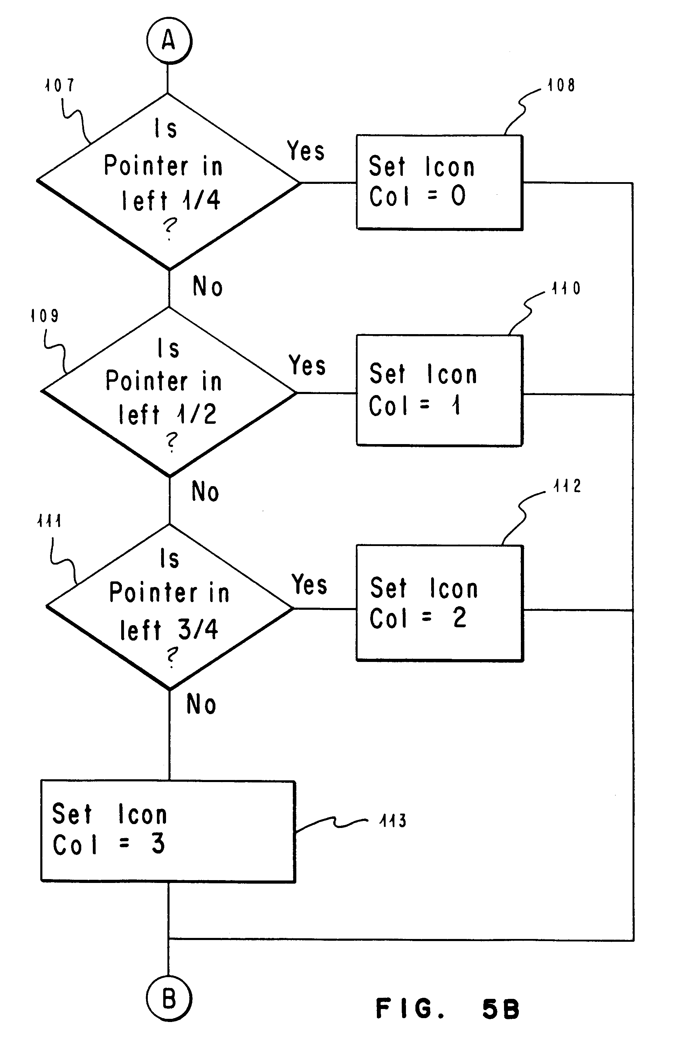

The operation then proceeds to Fig. 5B for a determination of the horizontal position of the icon pointer and corresponding selection of the column in the icon image table from which the icon to be displayed will be selected. At block 107 a test is made to determine if the pointer is in the left one – fourth of the display area. If so, at block 108 the icon to be displayed is selected from column 0 of the icon image table. If not, at block 109 a test is made to determine if the icon is presently positioned in the left half of the display area. If so, at block 110, the icon will be selected from column 1 in the icon image table. If not, at block 111 a test is made to determine if the icon is to point to a position in the left three – fourths of the display area. If so, at block 111 the icon to be displayed is selected from column 2 of the icon image table. If not, the icon must point to a position in the right one – fourth of the display area and, in this case, the icon is selected from column 3 of the icon image table. By this point in the process, the icon to be displayed is known because its row position in the icon image table was selected by the process of Fig. 5A and the column position of the icon image table was selected by the process of Fig. 5B.

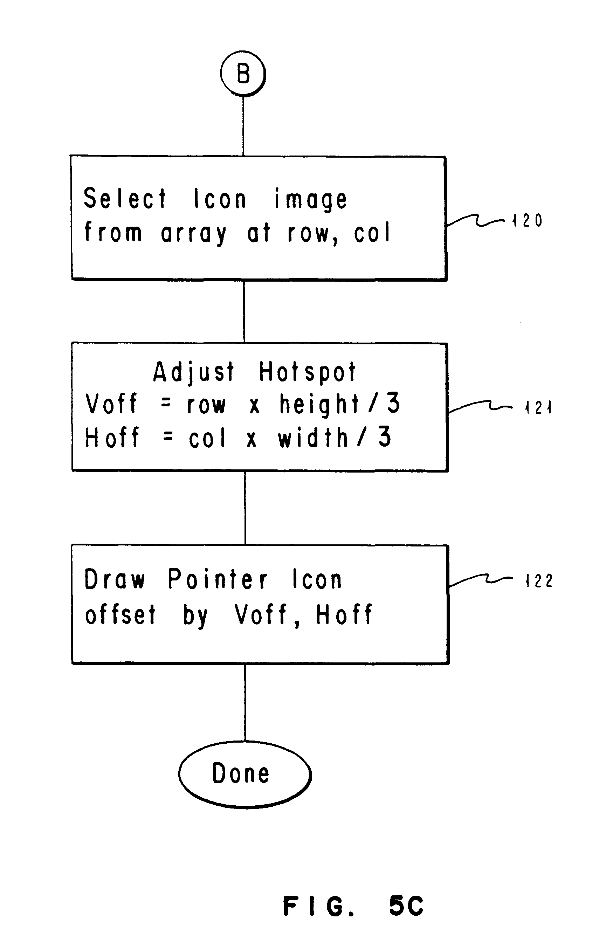

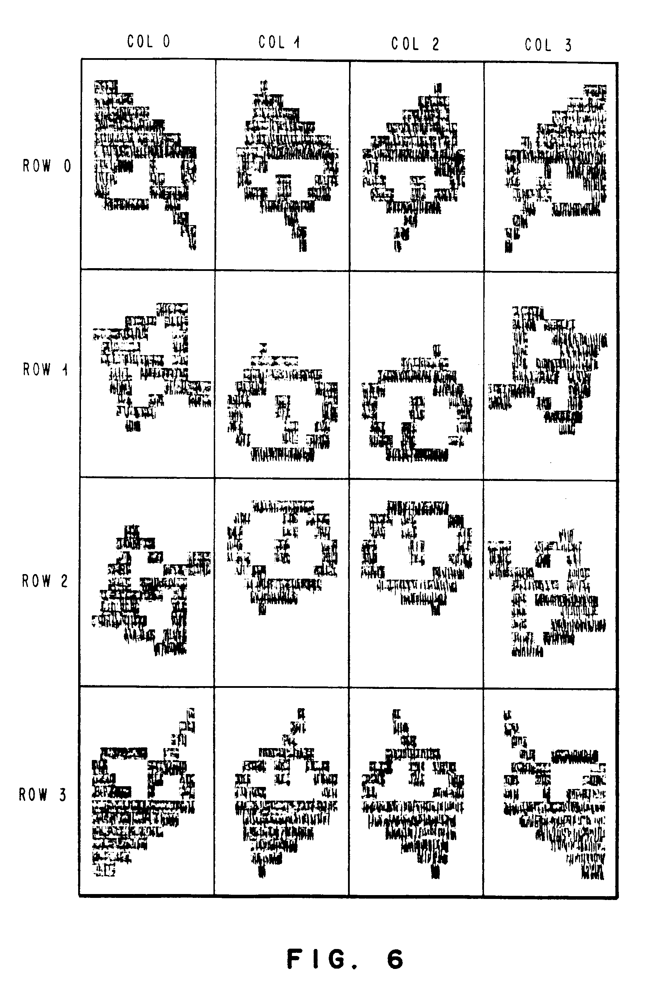

The remaining operation is shown in Fig. 5C where, at block 120, the icon image from the row and column of the icon image table determined by the processes of Figs. 5A and 5B is addressed. At block 121 an offset from the upper left corner position of the icon image is calculated to assist in a logical positioning of the icon image on the screen of the display device. All icon images, other than the one for the upper left corner of the screen are constructed such that their "points" are offset from the upper left corner of the icon image. This effect will be clearly noted by reference to Fig. 6. Thus, for example, when the Row 0, Col. 3 icon image is to be displayed it is necessary to displace it to the left on the display screen by an amount equal to the width of the icon image box. Similarly, when the Row 3, Col. 0 icon image is to be displayed it is necessary to displace it upwardly on the display screen by an amount equal to the height of the icon image box. For the other icon image positions the displacements are less than the width or height of the icon image box. The equation for determining this offset is given in block 121 of Fig. 5. With this calculation it is assumed that the positive directions of screen positioning are to the right and down. After this offset has been calculated, at block 122 the icon image selected at block 120 is communicated to the display device for presentation on the screen thereof.

Those skilled in the art will understand that while the invention has been described above with reference to the display screen being divided into a grid of 16 areas, additional resolution can be provided by dividing the screen into a larger number of areas and defining more icon images in the icon image table. Further, with display systems in which the capability is provided to download fonts to the display adapter, the icon images may be downloaded as characters to the display adapter and a corresponding character table, rather than as bit mapped images.

Two sets of icon images may be constructed and utilized alternately. One of the sets of icon images may be the video complement of the other set and the image to be displayed in a particular circumstance can depend on whether or not there is other material on the display screen at the icon position. With all points addressable displays it is advantageous to superimpose the icon image over the subject matter pointed to when this subject matter is in the center portion of the display screen.

The following BASIC program is a working embodiment of the invention as described above. It is operable with the IBM DOS BASICA.COM program on IBM personal computers. It is assumed that one of the mouse systems compatible with these computers is installed and that the mouse program conforms to the Microsoft Mouse Driver Standard.

```
1000 '
1010 '
Verify that mouse driver is running
1020 '
1030 DEF SEG = 0
1040 MSEG = 256 * PEEK(51*4+3)+PEEK(51*4+2)
1050 MOUSE = 256 * PEEK(51*4+1)+PEEK(51*4)+2
1060 IF MSEG=0 AND MOUSE=0 THEN GOTO 1090
1070 DEF SEG = MSEG
1080 IF PEEK(MOUSE-2) <> &HCF THEN GOTO 1130
1090 PRINT "Mouse driver not fount":END
1100 '


1110 ' Mouse driver looks ok if we made it here
1120 '
1130 SCREEN 2
1140 DIM ICON%(16,2,4,4) 'Icon bitmap array
1150 '
1160 ' Background (logical AND) mask 1
1170 ' set all background masks to all 1's
1180 '
1190 FOR X=0 TO 3
1200 FOR Y=0 TO 3
1210 FOR Z=0 TO 15
1220 ICON%(Z,0,Y,X)=&HFFFF
1230 NEXT:NEXT:NEXT
```

```
1240 ' Foreground 1
1250 ICON%(0,1,0,0)=&H1000 ' 0000000000000000
1260 ICON%(1,1,0,0)=&H7000 ' 0111000000000000
1270 ICON%(2,1,0,0)=&H7C00 ' 0111110000000000
1280 ICON%(3,1,0,0)=&H7F00 ' 0111111100000000
1290 ICON%(4,1,0,0)=&H7FC0 ' 0111111111000000
1300 ICON%(5,1,0,0)=&H7FF0 ' 0111111111110000
1310 ICON%(6,1,0,0)=&H7FFC ' 0111111111111100
1320 ICON%(7,1,0,0)=&H7C8C ' 0111110010001100
1330 ICON%(8,1,0,0)=&H70CC ' 0111000011001100
1340 ICON%(9,1,0,0)=&H60F8 ' 0110000011111000
1350 ICON%(10,1,0,0)=&H7F30 '0011111100110000
1360 ICON%(11,1,0,0)=&H18 ' 0000000000011000
1370 ICON%(12,1,0,0)=&HC ' 0000000000001100
1380 ICON%(13,1,0,0)=&H4 ' 0000000000000100
1390 ICON%(14,1,0,0)=&H0 ' 0000000000000000
1400 ICON%(15,1,0,0)=&H0 ' 0000000000000000
1410 ' Foreground 2
1420 ICON%(0,1,1,0)=&H0 ' 0000000000000000
1430 ICON%(1,1,1,0)=&H0 ' 0000000000000000
1440 ICON%(2,1,1,0)=&H0 ' 0000000000000000
1450 ICON%(3,1,1,0)=&H78 ' 0000000001111000
1460 ICON%(4,1,1,0)=&H7B8 ' 0000011110111000
1470 ICON%(5,1,1,0)=&H7F18 '0111111100011000
1480 ICON%(6,1,1,0)=&H3E18 '0011111000011000
1490 ICON%(7,1,1,0)=&H3FD8 '0011111111011000
1500 ICON%(8,1,1,0)=&H1DF8 '0001110111111000
1510 ICON%(9,1,1,0)=&H1C3F '0001110000111111
1520 ICON%(10,1,1,0)=&HCC7 '0000110011000111
1530 ICON%(11,1,1,0)=&HF80 '0000111110000000
1540 ICON%(12,1,1,0)=&H600 '0000011000000000
1550 ICON%(13,1,1,0)=&H0 ' 0000000000000000
1560 ICON%(14,1,1,0)=&H0 ' 0000000000000000
1570 ICON%(15,1,1,0)=&H0 ' 0000000000000000
```

7

```
1580 ' Foreground 3
1590 ICON%(0,1,2,0)=&H0 '      0000000000000000
1600 ICON%(1,1,2,0)=&H0 '      0000000000000000
1610 ICON%(2,1,2,0)=&H0 '      0000000000000000
1620 ICON%(3,1,2,0)=&H600 '    0000011000000000
1630 ICON%(4,1,2,0)=&HF80 '    0000111110000000
1640 ICON%(5,1,2,0)=&HCC7 '    0000110011000111
1650 ICON%(6,1,2,0)=&H1C3F '   0001110000111111
1660 ICON%(7,1,2,0)=&H1DF8 '   0001110111111000
1670 ICON%(8,1,2,0)=&H3FD8 '   0011111111011000
1680 ICON%(9,1,2,0)=&H3E18 '   0011111000011000
1690 ICON%(10,1,2,0)=&H7F18 '  0111111100011000
1700 ICON%(11,1,2,0)=&H7B8 '   0000011110111000
1710 ICON%(12,1,2,0)=&H78 '    0000000001111000
1720 ICON%(13,1,2,0)=&H0 '     0000000000000000
1730 ICON%(14,1,2,0)=&H0 '     0000000000000000
1740 ICON%(15,1,2,0)=&H0 '     0000000000000000
1750 ' Foreground 4
1760 ICON%(0,1,3,0)=&H0 '      0000000000000000
1770 ICON%(1,1,3,0)=&H0 '      0000000000000000
1780 ICON%(2,1,3,0)=&H4 '      0000000000000100
1790 ICON%(3,1,3,0)=&HC '      0000000000001100
1800 ICON%(4,1,3,0)=&H18 '     0000000000011000
1810 ICON%(5,1,3,0)=&H3F30 '   0011111100110000
1820 ICON%(6,1,3,0)=&H60F8 '   0110000011111000
1830 ICON%(7,1,3,0)=&H70CC '   0111000011001100
1840 ICON%(8,1,3,0)=&H7C8C '   0111110010001100
1850 ICON%(9,1,3,0)=&H7FFC '   0111111111111100
1860 ICON%(10,1,3,0)=&H7FF0 '  0111111111110000
1870 ICON%(11,1,3,0)=&H7FC0 '  0111111111000000
1880 ICON%(12,1,3,0)=&H7F00 '  0111111100000000
1890 ICON%(13,1,3,0)=&H7C00 '  0111110000000000
1900 ICON%(14,1,3,0)=&H7000 '  0111000000000000
1910 ICON%(15,1,3,0)=&H0 '     0000000000000000
```

```
1920 ' Foreground 5
1930 ICON%(0,1,0,1)=&H0 '    0000000000000000
1940 ICON%(1,1,0,1)=&H400 ' 0000010000000000
1950 ICON%(2,1,0,1)=&HF00 ' 0000111100000000
1960 ICON%(3,1,0,1)=&HFC0 ' 0000111111000000
1970 ICON%(4,1,0,1)=&H1FF0 '0001111111110000
1980 ICON%(5,1,0,1)=&H1FFC '0001111111111100
1990 ICON%(6,1,0,1)=&H3FFE '0011111111111110
2000 ICON%(7,1,0,1)=&H3C06 '0011110000000110
2010 ICON%(8,1,0,1)=&H318E '0011000110001110
2020 ICON%(9,1,0,1)=&H1D9C '0001110110011100
2030 ICON%(10,1,0,1)=&H7F0 '0000011111110000
2040 ICON%(11,1,0,1)=&HC0 ' 0000000011000000
2050 ICON%(12,1,0,1)=&H60 ' 0000000001100000
2060 ICON%(13,1,0,1)=&H20 ' 0000000000100000
2070 ICON%(14,1,0,1)=&H0 '  0000000000000000
2080 ICON%(15,1,0,1)=&H0 '  0000000000000000
2090 ' Foreground 6
2100 ICON%(0,1,1,1)=&H0 '    0000000000000000
2110 ICON%(1,1,1,1)=&H0 '    0000000000000000
2120 ICON%(2,1,1,1)=&H0 '    0000000000000000
2130 ICON%(3,1,1,1)=&H0 '    0000000000000000
2140 ICON%(4,1,1,1)=&H0 '    0000000000000000
2150 ICON%(5,1,1,1)=&H0 '    0000000000000000
2160 ICON%(6,1,1,1)=&H400 '  0000010000000000
2170 ICON%(7,1,1,1)=&HFC0 '  0000111111000000
2180 ICON%(8,1,1,1)=&H1FF8 ' 0001111111111000
2190 ICON%(9,1,1,1)=&H3C0E ' 0011110000001110
2200 ICON%(10,1,1,1)=&H7186 '0111000110000110
2210 ICON%(11,1,1,1)=&H6186 '0110000110000110
2220 ICON%(12,1,1,1)=&H60CC '0110000011001100
2230 ICON%(13,1,1,1)=&H30DC '0011000011011100
2240 ICON%(14,1,1,1)=&HFF0 '  0000111111110000
2250 ICON%(15,1,1,1)=&H0 '    0000000000000000
```

```
2260 ' Foreground 7
2270 ICON%(0,1,2,1)=&H0 '    0000000000000000
2280 ICON%(1,1,2,1)=&HFF0 ' 0000111111110000
2290 ICON%(2,1,2,1)=&H30DC '0011000011011100
2300 ICON%(3,1,2,1)=&H60CC '0110000011001100
2310 ICON%(4,1,2,1)=&H6186 '0110000110000110
2320 ICON%(5,1,2,1)=&H7186 '0111000110000110
2330 ICON%(6,1,2,1)=&H3C0E '0011110000001110
2340 ICON%(7,1,2,1)=&H1FF8 '0001111111111000
2350 ICON%(8,1,2,1)=&HFC0 ' 0000111111000000
2360 ICON%(9,1,2,1)=&H400 ' 0000010000000000
2370 ICON%(10,1,2,1)=&H0 '   0000000000000000
2380 ICON%(11,1,2,1)=&H0 '   0000000000000000
2390 ICON%(12,1,2,1)=&H0 '   0000000000000000
2400 ICON%(13,1,2,1)=&H0 '   0000000000000000
2410 ICON%(14,1,2,1)=&H0 '   0000000000000000
2420 ICON%(15,1,2,1)=&H0 '   0000000000000000
2430 ' Foreground 8
2440 ICON%(0,1,3,1)=&H0 '     0000000000000000
2450 ICON%(1,1,3,1)=&H0 '     0000000000000000
2460 ICON%(2,1,3,1)=&H20 '    0000000000100000
2470 ICON%(3,1,3,1)=&H60 '    0000000001100000
2480 ICON%(4,1,3,1)=&HC0 '    0000000011000000
2490 ICON%(5,1,3,1)=&H7F0 '   0000011111110000
2500 ICON%(6,1,3,1)=&H1D9C '  0001110110011100
2510 ICON%(7,1,3,1)=&H318E '  0011000110001110
2520 ICON%(8,1,3,1)=&H3C06 '  0011110000000110
2530 ICON%(9,1,3,1)=&H3FFE '  0011111111111110
2540 ICON%(10,1,3,1)=&H1FFC '0001111111111100
2550 ICON%(11,1,3,1)=&H1FF0 '0001111111110000
2560 ICON%(12,1,3,1)=&HFC0 ' 0000111111000000
2570 ICON%(13,1,3,1)=&HF00 ' 0000111100000000
2580 ICON%(14,1,3,1)=&H400 ' 0000010000000000
2590 ICON%(15,1,3,1)=&H0 '    0000000000000000
```

```
2600 ' Foreground 9
2610 ICON%(0,1,0,2)=&H0 '    0000000000000000
2620 ICON%(1,1,0,2)=&H20 '   0000000000100000
2630 ICON%(2,1,0,2)=&HF0 '   0000000011110000
2640 ICON%(3,1,0,2)=&H3F0 '  0000001111110000
2650 ICON%(4,1,0,2)=&HFF8 '  0000111111111000
2660 ICON%(5,1,0,2)=&H3FF8 ' 0011111111111000
2670 ICON%(6,1,0,2)=&H7FFC ' 0111111111111100
2680 ICON%(7,1,0,2)=&H603C ' 0110000000111100
2690 ICON%(8,1,0,2)=&H718C ' 0111000110001100
2700 ICON%(9,1,0,2)=&HC9B8 ' 0011100110111000
2710 ICON%(10,1,0,2)=&HFE0 ' 0000111111100000
2720 ICON%(11,1,0,2)=&H300 ' 0000001100000000
2730 ICON%(12,1,0,2)=&H600 ' 0000011000000000
2740 ICON%(13,1,0,2)=&H400 ' 0000010000000000
2750 ICON%(14,1,0,2)=&H0 '    0000000000000000
2760 ICON%(15,1,0,2)=&H0 '    0000000000000000
2770 ' Foreground 10
2780 ICON%(0,1,1,2)=&H0 '     0000000000000000
2790 ICON%(1,1,1,2)=&H0 '     0000000000000000
2800 ICON%(2,1,1,2)=&H0 '     0000000000000000
2810 ICON%(3,1,1,2)=&H0 '     0000000000000000
2820 ICON%(4,1,1,2)=&H0 '     0000000000000000
2830 ICON%(5,1,1,2)=&H0 '     0000000000000000
2840 ICON%(6,1,1,2)=&H20 '    0000000000100000
2850 ICON%(7,1,1,2)=&H3F0 '   0000001111110000
2860 ICON%(8,1,1,2)=&H1FF8 '  0001111111111000
2870 ICON%(9,1,1,2)=&H703C '  0111000000111100
2880 ICON%(10,1,1,2)=&H618E ' 0110000110001110
2890 ICON%(11,1,1,2)=&H6186 ' 0110000110000110
2900 ICON%(12,1,1,2)=&H3306 ' 0011001100000110
2910 ICON%(13,1,1,2)=&H3B0C ' 0011101100001100
2920 ICON%(14,1,1,2)=&HFF0 '  0000111111110000
2930 ICON%(15,1,1,2)=&H0 '    0000000000000000
```

```
2940 ' Foreground 11
2950 ICON%(0,1,2,2)=&H0 '      0000000000000000
2960 ICON%(1,1,2,2)=&HFF0 '    0000111111110000
2970 ICON%(2,1,2,2)=&H3B0C '   0011101100001100
2980 ICON%(3,1,2,2)=&H3306 '   0011001100000110
2990 ICON%(4,1,2,2)=&H6186 '   0110000110000110
3000 ICON%(5,1,2,2)=&H618E '   0110000110001110
3010 ICON%(6,1,2,2)=&H703C '   0111000000111100
3020 ICON%(7,1,2,2)=&H1FF8 '   0001111111111000
3030 ICON%(8,1,2,2)=&H3F0 '    0000001111110000
3040 ICON%(9,1,2,2)=&H20 '     0000000000100000
3050 ICON%(10,1,2,2)=&H0 '     0000000000000000
3060 ICON%(11,1,2,2)=&H0 '     0000000000000000
3070 ICON%(12,1,2,2)=&H0 '     0000000000000000
3080 ICON%(13,1,2,2)=&H0 '     0000000000000000
3090 ICON%(14,1,2,2)=&H0 '     0000000000000000
3100 ICON%(15,1,2,2)=&H0 '     0000000000000000
3110 ' Foreground 12
3120 ICON%(0,1,3,2)=&H0 '      0000000000000000
3130 ICON%(1,1,3,2)=&H0 '      0000000000000000
3140 ICON%(2,1,3,2)=&H400 '    0000010000000000
3150 ICON%(3,1,3,2)=&H600 '    0000011000000000
3160 ICON%(4,1,3,2)=&H300 '    0000001100000000
3170 ICON%(5,1,3,2)=&HFE0 '    0000111111100000
3180 ICON%(6,1,3,2)=&H39B8 '   0011100110111000
3190 ICON%(7,1,3,2)=&H718C '   0111000110001100
3200 ICON%(8,1,3,2)=&H603C '   0110000000111100
3210 ICON%(9,1,3,2)=&H7FFC '   0111111111111100
3220 ICON%(10,1,3,2)=&H3FF8 '  0011111111111000
3230 ICON%(11,1,3,2)=&HFF8 '   0000111111111000
3240 ICON%(12,1,3,2)=&H3F0 '   0000001111110000
3250 ICON%(13,1,3,2)=&HF0 '    0000000011110000
3260 ICON%(14,1,3,2)=&H20 '    0000000000100000
3270 ICON%(15,1,3,2)=&H0 '     0000000000000000
```

12

```
3280 ' Foreground 13
3290 ICON%(0,1,0,3)=&H0 '     0000000000000000
3300 ICON%(1,1,0,3)=&HE '     0000000000001110
3310 ICON%(2,1,0,3)=&H3E '    0000000000111110
3320 ICON%(3,1,0,3)=&HFE '    0000000011111110
3330 ICON%(4,1,0,3)=&H3FE '   0000001111111110
3340 ICON%(5,1,0,3)=&HFFE '   0000111111111110
3350 ICON%(6,1,0,3)=&H3FFE '  0011111111111110
3360 ICON%(7,1,0,3)=&H313E '  0011000100111110
3370 ICON%(8,1,0,3)=&H33CE '  0011001100001110
3380 ICON%(9,1,0,3)=&H1F06 '  0001111100000110
3390 ICON%(10,1,0,3)=&HCFC '  0000110011111100
3400 ICON%(11,1,0,3)=&H1800 ' 0001100000000000
3410 ICON%(12,1,0,3)=&H3000 ' 0011000000000000
3420 ICON%(13,1,0,3)=&H2000 ' 0010000000000000
3430 ICON%(14,1,0,3)=&H0 '    0000000000000000
3440 ICON%(15,1,0,3)=&H0 '    0000000000000000
3450 ' Foreground 14
3460 ICON%(0,1,1,3)=&H0 '     0000000000000000
3470 ICON%(1,1,1,3)=&H0 '     0000000000000000
3480 ICON%(2,1,1,3)=&H0 '     0000000000000000
3490 ICON%(3,1,1,3)=&H1E00 '  0001111000000000
3500 ICON%(4,1,1,3)=&H1DE0 '  0001110111100000
3510 ICON%(5,1,1,3)=&H18FE '  0001100011111110
3520 ICON%(6,1,1,3)=&H187C '  0001100001111100
3530 ICON%(7,1,1,3)=&H1BFC '  0001101111111100
3540 ICON%(8,1,1,3)=&H1FB8 '  0001111110111000
3550 ICON%(9,1,1,3)=&HFC38 '  1111110000111000
3560 ICON%(10,1,1,3)=&HE330 ' 1110001100110000
3570 ICON%(11,1,1,3)=&H1F0 '  0000000111110000
3580 ICON%(12,1,1,3)=&H60 '   0000000001100000
3590 ICON%(13,1,1,3)=&H0 '    0000000000000000
3600 ICON%(14,1,1,3)=&H0 '    0000000000000000
3610 ICON%(15,1,1,3)=&H0 '    0000000000000000
```

13

```
3620 ' Foreground 15
3630 ICON%(0,1,2,3)=&H0 '      0000000000000000
3640 ICON%(1,1,2,3)=&H0 '      0000000000000000
3650 ICON%(2,1,2,3)=&H0 '      0000000000000000
3660 ICON%(3,1,2,3)=&H60 '     0000000001100000
3670 ICON%(4,1,2,3)=&HE3F0 '   1110001111110000
3680 ICON%(5,1,2,3)=&HE330 '   1110001100110000
3690 ICON%(6,1,2,3)=&HFC38 '   1111110000111000
3700 ICON%(7,1,2,3)=&H1FB8 '   0001111110111000
3710 ICON%(8,1,2,3)=&H1BFC '   0001101111111100
3720 ICON%(9,1,2,3)=&H187C '   0001100001111100
3730 ICON%(10,1,2,3)=&H18FE '  0001100011111110
3740 ICON%(11,1,2,3)=&H1DE0 '  0001110111100000
3750 ICON%(12,1,2,3)=&H1E00 '  0001111000000000
3760 ICON%(13,1,2,3)=&H0 '     0000000000000000
3770 ICON%(14,1,2,3)=&H0 '     0000000000000000
3780 ICON%(15,1,2,3)=&H0 '     0000000000000000
3790 ' Foreground 16
3800 ICON%(0,1,3,3)=&H0 '      0000000000000000
3810 ICON%(1,1,3,3)=&H0 '      0000000000000000
3820 ICON%(2,1,3,3)=&H2000 '   0010000000000000
3830 ICON%(3,1,3,3)=&H3000 '   0011000000000000
3840 ICON%(4,1,3,3)=&H1800 '   0001100000000000
3850 ICON%(5,1,3,3)=&HCFC '    0000110011111100
3860 ICON%(6,1,3,3)=&H1F06 '   0001111100000110
3870 ICON%(7,1,3,3)=&H330E '   0011001100001110
3880 ICON%(8,1,3,3)=&H313E '   0011000100111110
3890 ICON%(9,1,3,3)=&H3FFE '   0011111111111110
3900 ICON%(10,1,3,3)=&HFFE '   0000111111111110
3910 ICON%(11,1,3,3)=&H3FE '   0000001111111110
3920 ICON%(12,1,3,3)=&HFE '    0000000011111110
3930 ICON%(13,1,3,3)=&H3E '    0000000000111110
3940 ICON%(14,1,3,3)=&HE '     0000000000001110
3950 ICON%(15,1,3,3)=&H0 '     0000000000000000
3960 '
```

14

```
3970 CLS
3980 '
3990 '
Reset mouse driver
4000 '
4010 M1%=0: M2%=0: M3%=0: M4%=0
4020 CALL MOUSE(M1%,M2%,M3%,M4%)
4030 '
4040 '   Call mouse driver to display pointer icon
4050 '
4060 M1%=1: CALL MOUSE(M1%,M2%,M3%,M4%)
4070 '
4080 '   Loop until Esc is pressed
4090 '
4100 WHILE INKEY$ <> CHR$(27)
4110 '
4120 ' Call mouse driver to set M3%=Horz (0-639),
     M4%=Vert (0-199)
4130 '
4140 PROWSAVE%=PTRROW%: PCOLSAVE%=PTRCOL%
4150 M1% = 3
4160 CALL MOUSE(M1%,M2%,M3%,M4%)
4170 '
4180 ' Select pointer icon and offsets based on mouse
     position
4190 '
4200 IF M4% < 50 THEN PTRROW%=0: GOTO 4240
4210 IF M4% < 100 THEN PTRROW%=1: GOTO 4240
4220 IF M4% < 150 THEN PTRROW%=2: GOTO 4240
4230 PTRROW%=3
4240 IF M3% < 160 THEN PTRCOL%=0: GOTO 4280
4250 IF M3% < 320 THEN PTRCOL%=1: GOTO 4280
4260 IF M3% < 480 THEN PTRCOL%=2: GOTO 4280
```

```
4270 PTRCOL%=3
4280 HOFFSET%=PTRCOL*5: VOFFSET%=PTRROW*5
4290 '
4300 ' If row or col has changed, set new pointer icon
     and offset
4310 '
4320 M1%=9
4330 M2%=HOFFSET%
4340 M3%=VOFFSET%
4350 IF (PTRROW%=PROWSAVE%) AND (PTRCOL%=PCOLSAVE%)
     THEN 4370
4360 CALL MOUSE(M1%,M2%,M3%,ICON%(0,0,PTRROW%,
     PTRCOL%))
4370 '
4380 '   Keep looping if Esc wasn't pressed
4390 '
4400 WEND
4410 '
4420 '   Turn off mouse pointer
4430 '
4440 M1%=1: CALL MOUSE(M1%,M2%,M3%,M4%)
4450 SCREEN 0
```

In summary, with the present invention a perspective view of a pointer icon is utilized such that toward the middle of the display frame the icon appears to point toward the display surface, rather than toward an edge of the display frame. This creates an illusion that the icon, such as an arrowhead, is reversing its direction smoothly in three dimensional space. Although the display screen is only a two dimension surface, the multiple icons can readily be configured to be shown in perspective and, therefore, appear to be three dimensional, without the requirement for gray scale or half tone display technology. The invention is readily implemented with conventional monochromatic or color graphics hardware commonly available for personal computers.

## Claims

1. A method of displaying a pointer controlled by a pointing device (16) on a screen of a visual display unit (4) comprising the steps (100, 102, 104) of determining an areas of said screen at which said pointer is to be directed,

   displaying (Fig 6) perspective views of said pointer which appears to be three dimensional and which appears to rotate about an axis which is parallel to a surface plane of said screen as said pointer is moved through the centre of said screen, including;

   addressing and displaying (122) a first pointer image having an axis of said pointer image tilted more toward a perpendicular orientation relative to said surface plane of said screen when said pointer image is displayed near said centre of said screen; and

   addressing and displaying a second pointer image having an axis of said pointer image tilted more towards a parallel orientation relative to said surface plane than said first pointer image when said second pointer image is displayed near an edge of said screen.

2. A method as claimed in claim 1 wherein said step of determining further comprises:
   identifying from an intended vertical position of said pointer a row address of pointer images; and
   identifying said pointer from an image addressed by said row address and said column address.

3. A method as claimed in claim 2 wherein said step of displaying further comprises:
   displaying said pointer from an image addressed by said row address and said column address.

4. A method as claimed in claim 3 wherein said step of displaying further comprises:
   offsetting the position of said pointer on said screen by a vertical and horizontal displacement depending on the position on said screen to which said pointer is to be directed.

5. A method as claimed in claim 4 wherein said row and column addresses are associated with a table for loading character addresses of pointer character into a display refresh buffer.

6. A method as claimed in claim 4 wherein said row and column addresses are associated with bit mapped font images which are directly loaded into a bit mapped, all points addressable display.

7. A method as claimed in claim 6 further comprises:
   superimposing a portion of said pointer over an image on said screen to which said pointer is directed.

8. A computer system having a keyboard (4), a visual display (4), and a pointing device (16), including means for controlling the display of one of a plurality of computer system perspective pointer image views comprising:
   means (processor 1, steps 100, 102, 104, 107, 109, 111) for determining a position at which one of said perspective pointer image views is to be displayed on a display screen of said computer system; and
   means, responsive (steps 108, 110, 112, 120, 14, 122) to said means for determining, for addressing and displaying, on said display screen, perspective pointer image views, including a first perspective pointer image view having an axis of said first perspective pointer image view tilted more towards a perpendicular orientation relative to a surface plane of said screen when said perspective pointer image view is displayed near said centre of said screen and a second perspective pointer image view having an axis of said second perspective pointer image view tilted more toward a parallel orientation relative to said surface plane of said screen than said first perspective pointer image view when said second perspective pointer image view is displayed near an edge of said screen;
   whereby, said means for displaying perspective pointer image views controls display of perspective pointer image views which appear to be three dimensional and which appear to rotate about an axis which is parallel to said surface plane of said screen as said perspective pointer image views are moved through the centre of said screen.

9. A system as claimed in claim 8 further comprising:
   means for identifying from an intended vertical position of said pointer a row address of pointer images; and means for identifying from an intended horizontal position of said pointer a column address of pointer images.

10. A system as claimed in claim 9 wherein said means for displaying further comprises:
    means for displaying said pointer from an image addressed by said row address and said column address.

**Patentansprüche**

1. Ein Verfahren zur Darstellung eines Zeigers, der von einer Zeigeeinrichtung (16) auf einem Bildschirm einer visuellen Anzeigeeinheit (4) gesteuert wird, wobei die Schritte (100, 102, 104) angewandt werden, um einen Bereich auf dem Bildschirm festzulegen, auf den der Zeiger gerichtet ist.
   Einschießlich eines Verfahrens zur Darstellung perspektivischer Ansichten des Zeigers (Fig 6), der dreidimensional zu sein scheint und sich um eine Achse zu drehen scheint, die parallel zur Oberfläche des Bildschirms ist, wenn der Zeiger durch die Bildschirmmitte geht.
   Ein Verfahren zur Dastellung (122) eines ersten Zeigerbildes, wobei die Achse des Zeigerbildes sich

17

EP 0 281 054 B1

senkrecht zur Oberfläche des Bildschirms befindet, wenn das Zeigerbild nahe bei der Bildschirmmitte angezeigt wird: sowie

ein Verfahren zur Darstellung eines zweiten Zeigerbildes, wobei die Achse des Zeigerbildes sich im Vergleich mit dem ersten Zeigerbild mehr parallel zur Oberfläche des Bildschirms befindet, wenn das zweite Zeigerbild nahe am Bildschirmrand angezeigt wird.

**2.** Ein in Anspruch 1 beanspruchtes Verfahren, zu dem im Hinblick auf die Festlegung noch folgendes kommt:

die Identifizierung einer Reihenadresse des Zeigerbildes von einer vertikalen Position des Zeigers aus; und

die Identifizierung des Zeigers von einem Bild, das von der Reihenadresse und der Spaltenadresse adressiert wird.

**3.** Ein in Anspruch 2 beanspruchtes Verfahren, zu dem im Hinblick auf die Darstellung noch folgendes kommt:

die Darstellung des Zeigers von einem Bild, das von der Reihenadresse und der Spaltenadresse adressiert wird.

**4.** Ein in Anspruch 3 beanspruchtes Verfahren, zu dem im Hinblick auf die Darstellung noch folgendes kommt:

das vertikale und horizontale Verschieben des Zeigers auf dem Bildschirm, in Abhängigkeit von der Position, auf die der Zeiger auf dem Bildschirm gerichtet werden soll.

**5.** Ein in Anspruch 4 beanspruchtes Verfahren, bei dem die Reihen – und Spaltenadressen einer Tabelle zugeordnet sind, um die Zeichenadressen des Zeigerzeichens in einen Anzeigeauffrischungspuffer zu laden.

**6.** Ein in Anspruch 4 beanspruchtes Verfahren, bei dem die Reihen – und Spaltenadressen Bildern in Bitabbildungen zugeordnet werden, die direkt in einen Bildschirm in Bitabbildungen geladen werden können, bei dem alle Punkte adressierbar sind.

**7.** Ein in Anspruch 6 beanspruchtes Verfahren umfaßt weiterhin:

das Schieben eines Teils des Zeigers über ein Bild auf dem Bildschirm, auf das der Zeiger gerichtet ist.

**8.** Ein Computersystem mit einer Tastatur (4), einer visuellen Anzeige (4) und einer Zeigeeinrichtung (16), einschießlich einem Mittel zur Steuerung der Anzeige von einer der zahlreichen perspektivischen Ansichten des Zeigerbildes eines Computersystems, das folgendes umfaßt:

Mittel (Prozessor 1, Schritte 100, 102, 104, 107, 109, 111) zur Festlegung der Postion, bei der eine der perspektivischen Ansichten des Zeigerbildes auf dem Bildschirm des Computersystems angezeigt werden soll; und

Mittel (Schritte 108, 110, 112, 120, 14, 122), die im Zusammenhang mit den Mittel zur Festlegung stehen, zur Darstellung perspektivischer Ansichten des Zeigerbildes auf dem Bildschirm, einschließlich einer ersten perspektivischen Ansicht des Zeigerbildes, bei der die Achse der ersten perspektivischen Ansicht des Zeigerbildes sich mehr senkrecht zur Oberfläche des Bildschirms befindet, wenn die perspektivische Ansicht des Zeigerbildes nahe bei der Bildschirmmitte angezeigt wird, sowie eine zweite perspektivische Ansicht des Zeigerbildes, bei der die Achse der perspektivischen Ansicht des Zeigerbildes sich mehr parallel zur Oberfläche des Bildschirms befindet als die erste perspektivische Ansicht des Zeigerbildes, wenn die zweite perspektivische Ansicht des Zeigerbildes nahe am Bild – schirmrand angezeigt wird;

wobei die Mittel zur Darstellung der perspektivischen Ansichten des Zeigerbildes die Anzeige von perspektivischen Ansichten des Zeigerbildes steuern, das dreidimensional zu sein scheint und das sich um eine Achse dreht, die parallel zur Oberfläche des Bildschirms ist, wenn die perspektivische Ansicht des Zeigerbildes über die Mitte des Bildschirms hinausgeht.

**9.** Ein in Anspruch 8 beanspruchtes System, das folgendes umfaßt:

ein Mittel zur Identifizierung einer Reihenadresse des Zeigerbildes von einer vertikalen Position des Zeigers aus; und

18

ein Mittel zur Identifizierung einer Spaltenadresse des Zeigerbildes von einer horizontalen Position des Zeigers aus.

10. Ein in Anspruch 9 beanspruchtes System, bei dem die Mittel zur Darstellung weiterhin umfassen:

ein Mittel zur Darstellung des Zeigers von einer Adresse aus, die von der Reihenadresse und der Spaltenadresse adressiert wird.

**Revendications**

1. Une méthode d'affichage d'un pointeur commandé par un périphérique de pointage (16) sur l'écran d'une unité d'affichage (4) comprenant les étapes (100, 102, 104) de détermination des zones dudit écran sur lesquelles doit être dirigé ledit pointeur,
affichant (Fig. 6) des vues en perspective dudit pointeur apparaissant en mode tri – dimensionnel et donnant l'effet d'une rotation autour d'un axe parallèle à un plan de surface dudit écran lorsque ledit pointeur est déplacé de manière à croiser le centre dudit écran, et également ;
adressant et affichant (122) une première image de pointeur présentant un axe de ladite image de pointeur plus incliné selon une orientation perpendiculaire audit plan de surface dudit écran lorsque ladite image de pointeur est affichée à proximité dudit centre dudit écran ; et
adressant et affichant une deuxième image de pointeur présentant un axe de ladite image de pointeur plus incliné vers une orientation parallèle audit plan de surface que ladite première image de pointeur lorsque ladite deuxième image de pointeur est affichée à proximité d'une bordure dudit écran.

2. Une méthode telle que décrite dans la Revendication 1 et selon laquelle ladite étape de détermination comprend en outre :
l'identification, à partir d'une position verticale souhaitée dudit pointeur, d'une adresse de ligne des images de pointeur ; et
l'identification dudit pointeur à partir d'une image dont l'adresse est désignée par ladite adresse de ligne et ladite adresse de colonne.

3. Une méthode telle que décrite dans la Revendication 2 et selon laquelle ladite étape d'affichage comprend en outre :
l'affichage dudit pointeur à partir d'une image dont l'adresse est désignée par ladite adresse de ligne et ladite adresse de colonne.

4. Une méthode telle que décrite dans la Revendication 3 et selon laquelle ladite étape d'affichage comprend en outre :
le décalage de la position dudit pointeur sur ledit écran selon un déplacement vertical et horizontal dépendant de la position, sur ledit écran, où doit être dirigé ledit pointeur.

5. Une méthode telle que décrite dans la Revendication 4 et selon laquelle lesdites adresses de ligne et de colonne sont associées à une table permettant de charger les adresses de caractère du caractère du pointeur dans un tampon de régénération de l'écran.

6. Une méthode telle que décrite dans la Revendication 4 et selon laquelle lesdites adresses de ligne et de colonne sont associées à des images de polices par points (bitmap) qui sont directement chargées dans un écran par points (bitmap) adressable en tous points.

7. Une méthode telle que décrite dans la Revendication 5 comprenant en outre :
la superposition d'une partie dudit pointeur sur une image dudit écran sur laquelle est dirigé ledit pointeur.

8. Un système informatique composé d'un clavier (4), d'un écran d'affichage (4), et d'un périphérique de pointage comprenant des moyens de commande de l'affichage d'une des vues d'un ensemble de vues en perspective d'image de pointeur d'un système informatique, notamment :
des moyens (Processeur 1, Etapes 100, 102, 104, 107, 109, 111) de détermination d'une position sur laquelle l'une desdites vues en perspective d'image de pointeur doit être affichée sur un écran dudit système informatique ; et
des moyens (Etapes 108, 110, 112, 120, 14, 122) correspondant auxdits moyens de détermination, permettant d'adresser et d'afficher sur ledit écran des vues en perspective d'image de pointeur, notamment une première vue en perspective d'image de pointeur présentant un axe de ladite première vue en perspective d'image de pointeur plus incliné selon une orientation perpendiculaire à un plan de surface dudit écran lorsque ladite vue en perspective d'image de pointeur est affichée à proximité dudit centre dudit écran et une deuxième vue en perspective d'image de pointeur présentant un axe de ladite deuxième vue en perspective d'image de pointeur plus incliné selon une orientation parallèle audit plan de surface dudit écran que ladite première vue en perspective d'image de pointeur lorsque ladite deuxième vue en perspective d'image de pointeur est affichée à proximité d'une bordure dudit écran ;

et, par suite, lesdits moyens d'affichage des vues en perspective d'image de pointeur commandent l'affichage de vues en perspective d'image de pointeur apparaissant en trois dimensions et en rotation autour d'un axe parallèle audit plan de surface dudit écran lorsque lesdites vues en perspective d'image de pointeur sont déplacées de manière à croiser le centre dudit écran.

9. Un système tel que décrit dans la Revendication 8 comprenant en outre :
des moyens d'identification, à partir d'une position verticale souhaitée dudit pointeur, d'une adresse de ligne des images de pointeur ; et
des moyens d'identification, à partir d'une position horizontale souhaitée dudit pointeur, d'une adresse de colonne des images de pointeur.

10. Un système tel que décrit dans la Revendication 9 et selon lequel lesdits moyens d'affichage comprennent en outre :
des moyens d'affichage dudit pointeur à partir d'une image dont l'adresse est désignée par ladite adresse de ligne et ladite adresse de colonne.

FIG. 1

APA Display — 640 x 200 Pels

FIG. 2

0  0

99,639

199,319

APA Display - 640 x 200 Pels

X

FIG.  3

FIG. 4

**START**

100 — Is Pointer in top 1/4 ?

Yes → 101 — Set Icon Row = 0

No ↓

102 — Is Pointer in top 1/2 ?

Yes → 103 — Set Icon Row = 1

No ↓

104 — Is Pointer in top 3/4 ?

Yes → 105 — Set Icon Row = 2

No ↓

Set Icon Row = 3 — 106

Ⓐ

**FIG. 5A**

FIG. 5B

B

Select Icon image
from array at row, col          120

Adjust Hotspot
Voff = row x height / 3          121
Hoff = col x width / 3

Draw Pointer Icon          122
offset by Voff, Hoff

Done

F I G.   5C

F I G . 6